# EUROPEAN PATENT APPLICATION

(11) **EP 1 876 734 A1**
(43) Date of publication of application: **09.01.2008**
(21) Application number: 07013308.7
(22) Date of filing: 06.07.2007
(51) Int. Cl.: H04B 7/26

(54) **Wireless communication device and wireless communication method**

(30) Priority: 07.07.2006 JP 2006188415
(71) Applicant: NTT DoCoMo, Inc., Chiyoda-ku Tokyo 100-6150 (JP); TOKYO INSTITUTE OF TECHNOLOGY, Tokyo 152-8550 (JP)
(72) Inventor: Shirakabe, Masahige, Tokyo 100-6150 (JP); Asai, Takahiro, Tokyo 100-6150 (JP); Matoba, Naoto, Tokyo 100-6150 (JP); Yoshino, Hitoshi, Tokyo 100-6150 (JP); Suyama, Satoshi, Tokyo 152-8550 (JP); Fukawa, Kazuhiko, Tokyo 152-8550 (JP); Suzuki, Hiroshi, Tokyo 152-8550 (JP)
(74) Representative: GROSSE BOCKHORNI SCHUMACHER

(57) **Abstract**

An object of this application is to provide a wireless communication device and a wireless communication method enabling improvement of communication efficiency. A communication control portion of a mobile station determines, in a procedure prior to data communication with a base station, a time interval for performing data transmission/reception with the base station. In the time interval determined by the communication control portion, a digital baseband circuit (107) executes control so as to perform data transmission as well as data reception.

## Description

### BACKGROUND OF THE INVENTION

### Field of the Invention

This invention relates to a wireless communication device and to a wireless communication method.

### Related Background Art

Time division multiplexing communication methods are known in which, during one communication process, another communication process can be performed simultaneously. For example, in Japanese Patent Laid-open No. 2000-13858, a time division multiplexing communication method is described in which, in a communication method of a cellular network, time division slots are allocated to a control channel and to a communication channel, protocol information is exchanged with the base station over the control channel when usage is begun, the communication channel is provided, and voice communication or data communication is operated over the data channel.

### SUMMARY OF THE INVENTION

However, in the time division multiplexing communication method of the above-described Japanese Patent Laid-open No. 2000-13858, there is the problem that spectrum efficiency is poor. That is, in the time division multiplexing method described in Japanese Patent Laid-open No. 2000-13858, in order to perform voice communication or data communication, allocated slots are used, and either transmission or reception is performed. In such a method in which allocated slots are used to perform transmission and reception in alternation, there is a limit to the data transmission quantity, and so the problem that the frequency utilization efficiency is decreased.

Hence an object of this invention is to provide a wireless communication device and wireless communication method with improved spectrum efficiency, in order to resolve the above-described problem.

In order to resolve the above problem, a wireless communication method of this invention comprises a time interval determination step of determining a time interval for performing transmission/reception of data to and from a destination device in a procedure prior to data communication with the destination device, and a data communication control step of executing control so as to perform data transmission in the time interval determined in the time interval determination step and also to perform data reception.

Further, a wireless communication device of this invention comprises time interval determination means for determining the time interval for performing data transmission/reception to and from the destination device in a procedure prior to data communication with the destination device, and data communication control means for executing control so as to perform data transmission in the time interval determined by the time interval determination means, and also to perform data reception.

By means of this invention, a time interval is determined to perform data transmission/reception with a destination device in a procedure prior to data communication with the destination device, and control can be executed so as to perform data transmission in the determined time interval, while simultaneously receiving data. By this means, spectrum efficiency can be improved.

Further, a wireless communication method of this invention comprises a time interval determination step of determining a time interval for performing transmission/reception of data to and from a destination device in a procedure prior to data communication with the destination device, as well as determining a time interval for performing data transmission/reception to and from another destination device, different from the above destination device, in a procedure prior to data communication with the other destination device; and a data communication control step of executing control so as to receive data from the destination device and to transmit data to the other destination device, and of executing control so as to receive data from the other destination device and to transmit data to the destination device, in the time interval determined in the time interval determination step.

By means of this invention, in a procedure prior to data communication with a destination device, a time interval for performing data transmission/reception with the destination device is determined, and in addition, in a procedure prior to data communication with another destination device different from the destination device, the time interval for performing data transmission/reception with the destination device is determined as the time interval for performing data transmission/reception with the other destination device; in the time interval thus determined, communication can be executed such that data reception from the destination device, and data transmission to the other destination device are performed, and communication can be controlled such that data reception from the other destination device and data transmission to the destination device are simultaneously performed. By this means, spectrum efficiency can be improved.

Further, a wireless communication method of this invention comprises a time interval determination step of determining a first time interval for performing transmission/reception of data to and from a destination device in a procedure prior to data communication with the destination device, as well as determining a second time interval, different from the first time interval, for performing data transmission/reception to and from another destination device, different from the above destination device, in a procedure prior to data communication with the other destination device; and a data communication control step of executing control so as to transmit and receive data to and from the destination device in the first time interval determined by the time interval determination step, and of executing control so as to transmit and receive data to and from the other destination device in the second time interval determined by the time interval determination step.

By means of this invention, a first time interval to perform data transmission/reception with a destination device is determined in a procedure prior to data communication with the destination device, and in addition a second time interval, different from the first time interval, to perform data transmission/reception with another destination device different from the destination device is determined in a procedure prior to data communication with the other destination device; in the first time interval thus determined, control can be executed so as to transmit and receive data simultaneously with the destination device, and in the second time interval thus determined, control can be executed so as to transmit and receive data with the other destination device. By this means, frequency utilization efficiency can be improved.

Further, a wireless communication method of this invention comprises a time interval determination step of determining, in a procedure prior to data communication with a destination device, a time interval for performing data transmission/reception with the destination device, and a data communication control step of executing control, in the time interval determined in the time interval determination step, to perform data transmission using one frequency band and also to perform data reception, and in addition to executing control, in the time interval, to perform data transmission using another frequency band different from the one frequency band and also to perform data reception.

By means of this invention, in a procedure prior to data communication with a destination device, a time interval is determined for performing data transmission with the destination device, and control can be executed in the time interval thus determined to perform data transmission using one frequency band while simultaneously performing data reception, and in addition, in the time interval, control can be executed to perform data transmission using another frequency band different from the one frequency band while simultaneously performing data reception. By using this means, spectrum efficiency can be improved.

Further, a wireless packet communication method of this invention comprises a packet length determination step of determining, in a procedure prior to data communication with a destination device, a packet length for performing transmission/reception of data with the destination device, and a data communication control step of executing control to perform data transmission using the packet length determined by the packet length determination step, and also to perform data reception.

By means of this invention, in a procedure prior to data communication with the destination device, the packet length used to perform data transmission/reception with the destination device is determined, and control can be executed so as to perform data transmission according to the packet length thus determined, while simultaneously performing data reception. By using this means, spectrum efficiency can be improved.

Further, it is preferable that a wireless communication method of this invention compares the quantity of received data and the quantity of transmitted data, and when the quantity of transmitted data is small, performs transmission data processing so as to cause the redundancy of the transmitted data to be increased.

By means of this invention, the quantity of received data and the quantity of transmitted data are compared, and when the quantity of transmitted data is small, transmission data processing can be performed so as to increase the redundancy of transmitted data, the entirety of time intervals partitioned as time slots can be utilized to intensify interference robustness, and in addition, by decreasing transmission power, the effect of interference occurring upon simultaneous transmission and reception can be reduced.

By means of this invention, control can be executed to perform data transmission within a predetermined time interval, while simultaneously performing data reception, so that spectrum efficiency can be improved.

### BRIEF DESCRIPTION OF THE DRAWINGS

Fig. 1 is a block diagram of the wireless communication device of a first embodiment;

Fig. 2 is a sequence diagram showing processing when simultaneous transmission/reception is performed between a mobile station and a base station in the first embodiment;

Fig. 3 is a timing chart showing communication channel control based on SWARQ, in TDMA/TDD between the mobile station and the base station in the first embodiment;

Fig. 4 is a timing chart showing timing flow of communication channel control based on GBN or SR in a second embodiment;

Fig. 5 shows a cellular configuration using a base station 300, relay station 310, and relay station 320 in a third embodiment;

Fig. 6 is a timing chart showing the timing flow of half-duplex communication channel control in the case of indirect relay in the third embodiment;

Fig. 7 is a timing chart showing the timing flow of full-duplex communication channel control in the case of indirect relay in a fourth embodiment;

Fig. 8 is a block diagram of a wireless communication device, with analog/digital interference canceller, to implement the hybrid TDD/FDD communication channel control method of a fifth embodiment;

Fig. 9 is a timing chart showing the timing flow of communication channel control of a base station and mobile station, using different carrier frequencies for downlink and uplink, in the fifth embodiment;

Fig. 10 is a timing chart showing the timing flow of communication channel control based on SRARQ in CSMA/CA in a sixth embodiment; and,

Fig. 11 is a sequence diagram of communication channel control in a seventh embodiment.

### DESCRIPTION OF THE PREFERRED EMBODIMENTS

This invention can easily be understood by examining the detailed description below, referring to the attached drawings showing one embodiment. Following this, embodiments of the invention are explained referring to the attached drawings. When possible, the same symbols are assigned to the same portions, and redundant explanations are omitted.

### First Embodiment

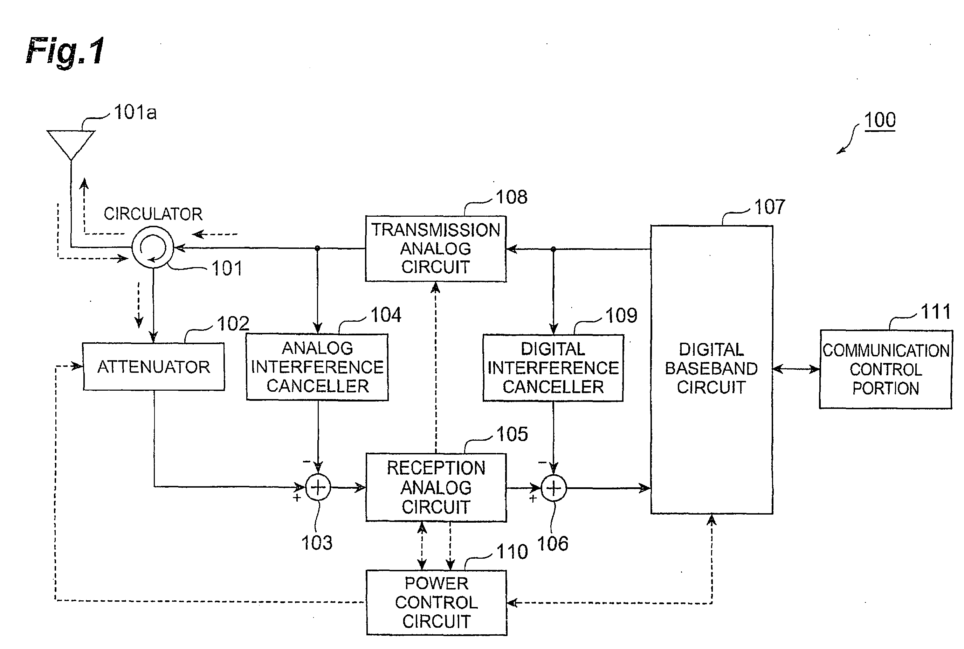

Fig. 1 is a block diagram of the wireless communication device of a first embodiment, and is a block diagram showing a simultaneous transmission/reception mechanism using a TDD (Time Division Duplex) method.

The wireless communication device 100 shown in Fig. 1 comprises an interference canceller, which can apply for uplink time slots and downlink time slots, which are the same time intervals (same time slots) at the same times, and can eliminate interference occurring at these times. This wireless communication device 100 comprises a circulator 101, attenuator 102, subtractor 103, analog interference canceller 104, reception analog circuit 105, digital baseband circuit 107 (data communication control means), transmission analog circuit 108, digital interference canceller 109, power control circuit 110, and communication control portion 111 (time interval determination means and data communication control means).

Reception signals received via the antenna 101a pass through the circulator 101 and attenuator 102, and are output to the subtractor 103. Transmission signals output from the transmission analog circuit 108 pass through the circulator 101 and antenna 101a, and are transmitted by wireless communication. Transmission signals output from the transmission analog circuit 108 are input to the analog interference canceller 104 in order to eliminate interference with reception signals.

The analog interference canceller 104 generates interference cancellation signals to eliminate interference with reception signals by transmission signals; the subtractor 103 reduces the effect of interference signals in the reception signals by subtracting interference cancellation signals from reception signals. In the subtractor 103, if the interference component cannot be completely eliminated from reception signals after subtraction of interference cancellation signals, then an interference signal component remains in the reception signals. To eliminate this interference signal component, interference cancellation is performed using a digital interference canceller, described below, and a subtractor 106.

The reception analog circuit 105 subjects the reception signals to signal amplification by an amplifier, band limiting by a filter, and frequency conversion by a down-converter, and also performs A/D conversion.

The subtractor 106 subtracts interference cancellation signals, generated by the digital interference canceller 109, from the digital reception signals output from the reception analog circuit 105, to generate digital reception signals with interference in the digital signals cancelled, and outputs the result to the digital baseband circuit 107.

The digital baseband circuit 107 generates transmission signals to be transmitted, outputs the signals to the transmission analog circuit 108, and takes as input digital reception signals output from the subtractor 106, outputting the input signals to the communication control portion 111, and causes various other data processing to be performed (for example, causes communication processing to be performed according to a communication procedure, and similar).

The transmission analog circuit 108 performs D/A conversion of digital transmission signals output from the digital baseband circuit 107 to generate analog transmission signals, which are converted into RF-band analog signals through signal amplification by an amplifier, band limiting by a filter, and frequency conversion by an up-converter.

The digital interference canceller 109 is a portion which generates the wraparound interference component which remains in the signal converted into a digital signal. The subtractor 106 performs the above-described cancellation by subtracting the interference signal component generated by the digital interference canceller 109 from the transmission signal output from the reception analog circuit 105. Due to the effect of signal saturation in each analog element prior to A/D conversion, there is a significant difference in the interference signal cancellation characteristic in the analog domain and in the digital domain; but by attenuating the signal power in the attenuator 102, the wraparound interference signal cancellation characteristic in each domain can be improved.

The power control circuit 110 is a circuit which controls the attenuator 102, reception analog circuit 105, transmission analog circuit 108, and digital baseband circuit 107.

The communication control portion 111 is a portion which performs various information processing, based on reception signals input from the digital baseband circuit 107. Further, the communication control portion 111 can determine control signals to be transmitted to the destination device, or time slots decided according to these control signals, or the frequency to be used, and can perform processing to transmit data using the time slots or frequency thus determined. For example, the communication control portion 111 issues a simultaneous transmission/reception request, or issues a simultaneous transmission/reception response, and transmits wireless resource information; after this procedure has been performed, the time slots thus determined are used to perform data transmission and reception.

In this way, by causing the signal power to be attenuated by the attenuator 102 in the wireless communication device 100, the effect of signal saturation arising due to the wraparound interference signal received by the analog interference canceller 104 and subtractor 103 in the analog domain can be alleviated. Hence, in order to realize full-duplex communication with another wireless communication device, the wireless communication device 100 can allocate wireless resources (allocates slots) for wireless communication devices, and can perform transmission and reception with the respective wireless communication devices at the same time using the same frequency band.

Further, the following processing is performed in the communication control portion 111 within this wireless communication device 100. That is, the control portion of the wireless communication device 100 can detect whether data has been correctly received, and ACK or NAK signals are transmitted to the respective wireless communication devices. At this time, the wireless communication device 100 can use, as the ARQ, Stop-and-Wait (SW), Go-Back-N (GBN), Selective Repeat (SR), and similar.

SW is a method in which, when one packet has been transmitted, the next packet is not transmitted until the corresponding ACK or NAK has been received.

GBN is a method in which, when one packet has been transmitted, N packets are transmitted, even when the corresponding ACK or NAK has not been received. When an error is detected on the receiving side, or when the sequence number is discontinuous, a NAK is returned immediately, and at the same time packets sent with sequence numbers following the erroneous packet are all discarded, and the device waits for retransmitting the erroneous packet. On the transmitting side, upon receiving a NAK, the packet with sequence number equal to the received sequence number and all subsequent packets are sent once again.

SR is the ARQ method with highest efficiency; in this method, when one packet is transmitted, N packets (the congestion window size) can be sent even when a corresponding ACK or NAK is not received. On the receiving side, a NAK is returned only for packets in which an error is detected, and resending of erroneous packets is awaited. On the transmitting side, when a NAK is received, only the packet having the sequence number equal to the received sequence number is resent. SR is essentially the same method as GBN, but differs in that only the erroneous packet is reset when a NAK is received, and so is more efficient than GBN.

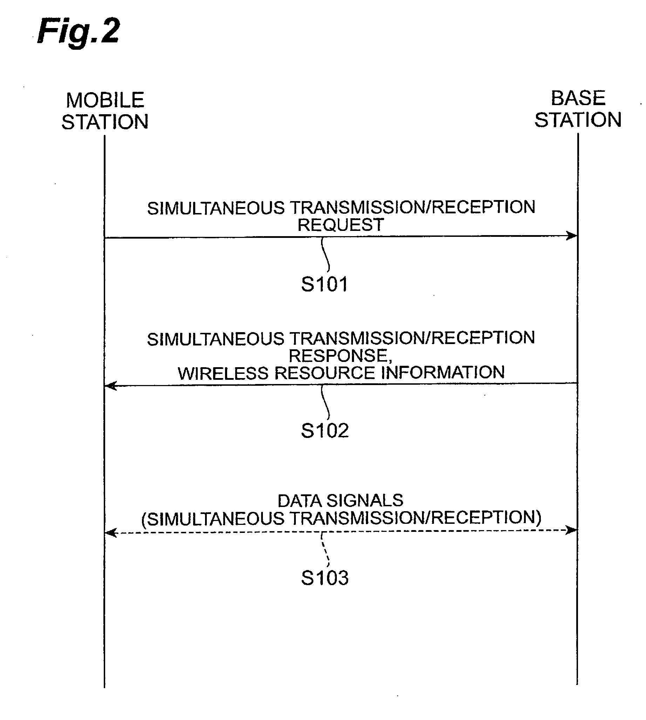

Operation in the wireless communication device 100 explained above when performing the above-described ARQ is explained. Fig. 2 is a sequence diagram showing processing when simultaneous transmission/reception is performed between a mobile station and a base station. The mobile station and base station each comprise the above-described wireless communication device 100.

First, in the mobile station, a simultaneous transmission/reception request is issued to the base station (S101). Then, in the base station, a simultaneous transmission/reception response is issued as the response to the simultaneous transmission/reception request, and in addition, wireless resource information is transmitted (S102). The simultaneous transmission/reception response is a response signal, sent when the base station receives a simultaneous transmission/reception request transmitted from a mobile station, indicating whether simultaneous transmission/reception is possible or impossible. The wireless resource information comprises the channel for allocation; if TDD is used, a time slot number indicating the time interval is included, and if CDMA is used, the allocated codes are included.

Then, using the wireless resource information determined in S102, data signals are transmitted and received, at the same time and at the same frequency, between the base station and the mobile station (S103). In this basic sequence, an example has been explained in which the base station, having received the simultaneous transmission/reception request, transmits wireless resource information indicating the communication channel used to perform simultaneous transmission and reception, together with a simultaneous transmission/reception response; but the mobile station may, together with the simultaneous transmission/reception request, transmit wireless resource information for use in simultaneous transmission and reception.

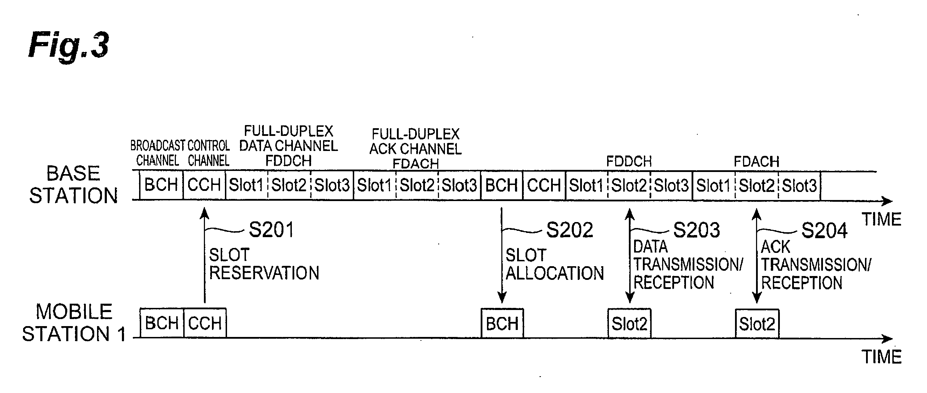

The timing flow of data transmission and reception is explained in further detail. Fig. 3 is a timing chart indicating communication channel control based on TDMA/TDD SWARQ between a base station and a mobile station.

In the first embodiment, in order to realize full-duplex communication which can simultaneously transmit/receive data between the base station and the mobile station, the base station performs slot allocation, and data transmission and reception is performed between base station and mobile station in the same time slot. Further, detection is performed to determine whether data has been received correctly, and ACK or NAK signals are transmitted from the base station or mobile station. The timing flow of communication channel control based on SW at the mobile station and base station operating in this way is here explained. Fig. 3 shows, as an example, the communication channel control timing flow for full-duplex communication of a three-channel TDMA base. In this embodiment, data transmission and reception are performed simultaneously, and so there is no distinction between channels corresponding to uplink and downlink as in the prior art, but there is a distinction between a full-duplex channel which is the data channel, and a comparatively short full-duplex ACK channel. As the specific communication channel control, there are three actions, which are (1) slot reservation (simultaneous transmission/reception request); (2) slot allocation (simultaneous transmission/reception response, notification of wireless resource information); and (3) data transmission and reception. The above (1) slot reservation and (2) slot allocation are performed in the time interval determination step, and (3) data transmission/reception is the data communication control step.

As shown in this timing chart, communication channel control is performed repeatedly in the order of the broadcast channel BCH, control channel CCH, full-duplex data channel FDDCH, and full-duplex ACK channel FDACH, to perform control procedures and to transmit and receive data between the base station and mobile station. The channel used to transmit control signals from the base station to the mobile station is the broadcast channel, and the channel used to transmit control signals from the mobile station to the base station is the control channel.

Below, details of the timing chart of Fig. 3 are explained. The mobile station issues a slot reservation request to the base station using the control channel CCH to perform simultaneous transmission/reception (S201). This processing is processing corresponding to the transmission/reception request in Fig. 2. Upon receiving the request, the base station notifies the mobile station, using the broadcast channel BCH, that an empty "slot 2" has been allocated (S202). This is equivalent to the simultaneous transmission/reception response and notification of wireless resource information in Fig. 2.

Next, simultaneous data transmission/reception is performed between the base station and the wireless communication device 100 in "slot 2" of the full-duplex data channel FDDCH (S203). In Fig. 3, an example is shown in which the mobile station issues a slot reservation request for simultaneous transmission/reception, and simultaneous transmission/reception is performed; but if either the mobile station or the base station, whichever does not have data for transmission, is prevented from transmitting signals, interference with adjacent cells can be reduced.

Thereafter, the mobile station and base station perform simultaneous transmission and reception of ACK or NAK signals in "slot 2" of the full-duplex ACK channel FDACH, in order to confirm the arrival of data simultaneously transmitted and received in "slot 2" of the full-duplex data channel FDDCH (S204). When slot reservation is performed by the base station rather than by the mobile station, a request is not issued from the mobile station. It is desirable that the slot length of the full-duplex ACK channel FDACH be set shorter than that of the full-duplex data channel FDDCH to improve the frequency utilization efficiency, and it is desirable that transmission is performed using an error correction code or similar with a low coding rate, due to the fact that efficiency is sharply degraded when errors occur in the full-duplex ACK channel FDACH.

In Fig. 3, an example is shown in which slot reservation is performed by the mobile station; when slot reservation is performed by the base station, after a simultaneous transmission/reception request and wireless resource information notification are issued to the mobile station, simultaneous transmission/reception may be begun. In this case, the request is not issued from the mobile station, and so the procedure of data transmission from mobile station to base station using the control channel CCH can be omitted.

For each time slot in the TDMA/TDD method shown in Fig. 3, for reducing the quantity of transmission information in the full-duplex ACK channel FDACH compared with the full-duplex data channel FDDCH, better efficiency is achieved when the slot length is set to be shorter for the full-duplex ACK channel FDACH than for the full-duplex data channel FDDCH when determining the TDMA/TDD frame structure.

Further, when an error occurs in the full-duplex ACK channel FDACH, the same data is retransmitted even when the data has been received correctly, or erroneously received data may be judged to have been received correctly, so that spectrum efficiency is sharply degraded. Hence it is desirable that a method with satisfactory robustness for errors be used, employing an error correction code or similar with a low coding rate, for transmission in the full-duplex ACK channel FDACH.

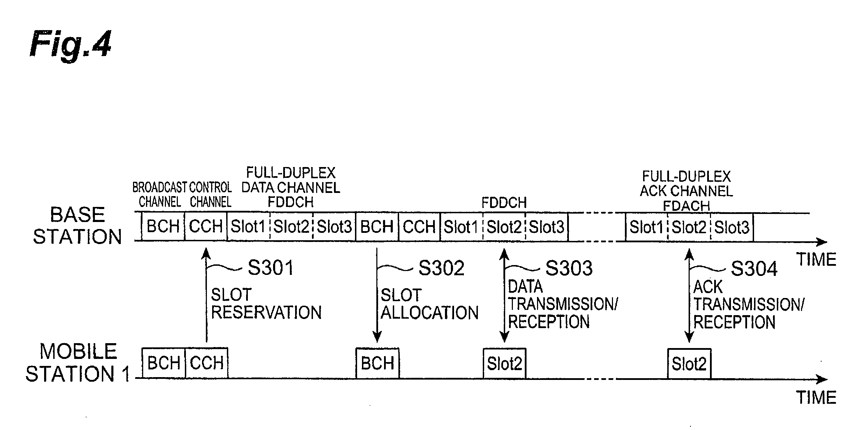

Next, the communication channel control timing flow based on GBN or SR is explained. Fig. 4 is a timing chart showing the timing flow for communication channel control based on GBN or SR. The method in Fig. 4 differs from the method based on SW shown in Fig. 3 in that the base station and mobile station do not send an ACK or NAK each time data is received, but after N slots' worth of data has been transmitted and received in the full-duplex data channel FDDCH, ACK or NAK signals are returned together for N slots' worth of data in the full-duplex ACK channel FDACH. When the base station or mobile station receives a NAK through the full-duplex ACK channel FDACH, in the GBN method N slots' worth of packets are retransmitted, while in the SR method only the packet for which the NAK was received is retransmitted. In the SR method, not only the retransmitted packet, but new packets are also transmitted in the next N slots of the full-duplex data channel FDDCH.

Below is an explanation based on Fig. 4. The mobile station uses the control channel CCH to request reservation of slot 2 in order to perform simultaneous transmission/reception with the base station, as a simultaneous transmission/reception request (S301); upon receiving the reservation request, the base station uses the broadcast channel BCH to notify the "mobile station 1" of allocation of the empty "slot 2", as the simultaneous transmission/reception response and notification of wireless resource information (S302). Next, the mobile station and base station perform simultaneous transmission/reception of data in "slot 2" of the full-duplex data channel FDDCH, and perform simultaneous transmission/reception of N slots' worth of data in "slot 2" of the full-duplex data channel FDDCH (S303).

Finally, after the simultaneous transmission/reception of N slots' worth of data, ACK or NAK signals are simultaneously transmitted and received over the full-duplex ACK channel FDACH for the N slots' worth of data (S304). When, similarly to the SW method, slot reservation is performed by the base station rather than the mobile station, a request is not issued from the mobile station. By thus combining [signals in] the full-duplex ACK channel FDACH in the GBD and SR methods, the efficiency can be raised above that for the SW method. A station which has no transmission data in the N slots' worth of the full-duplex data channel FDDCH can transmit ACKs or NAKs without waiting for the full-duplex ACK channel FDACH, and can halt subsequent transmission, and so can reduce interference with adjacent cells.

In TDMA/TDD methods of the prior art, transmission of both data and ACK/NAK signals is performed using separate time slots for the upward line which is the uplink and for the downward line which is the downlink; but by means of the above method using a wireless communication device 100 with an analog/digital interference canceller, to transmit and receive data at the same time using the same frequency, communication channel control efficiency can be improved.

The advantageous results of action of the wireless communication device 100 of this first embodiment are explained. By means of a mobile station comprising this wireless communication device 100, the communication control portion 111 determines the time intervals for performing data transmission/reception with the base station, which is the destination device, in a procedure performed with the base station prior to data communication, and control can be executed to perform data transmission in the time interval thus determined for the digital baseband circuit 107, while simultaneously performing data reception. By this means, spectrum efficiency can be improved.

### Second Embodiment

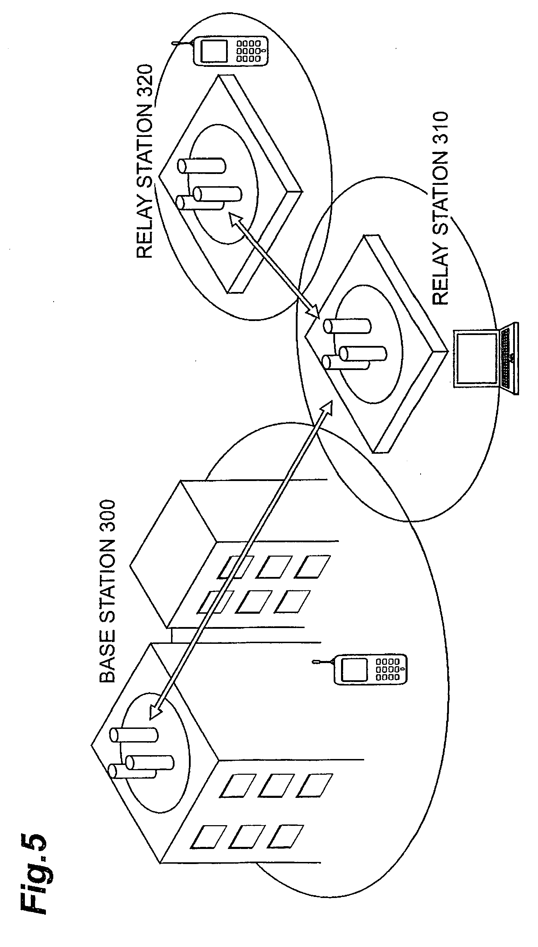

Next, a communication channel control method in which relaying is performed from a base station 300 using a wireless communication device 100 with an analog/digital interference canceller in a TDMA/TDD method is explained, as a second embodiment of the invention. Fig. 5 shows a cellular configuration which employs relay stations 310 and 320 comprising wireless communication devices 100 with interference cancellers. Each of the relay stations 310 and 320 performs indirect relaying, and signals transmitted from the base station 300 to the relay station 310 are once demodulated by the relay station 310, and then transmitted to the relay station 320. Signals transmitted from the base station 3 00 do not directly reach the relay station 320, and interference between stations is assumed to be only interference from an adjacent station (overreach of one station).

The base station 300 and relay stations 310 and 320 also provide service to mobile stations within their own cells; for simplicity, it is assumed that communication between each station (the base station 300, relay station 310, and relay station 320) and mobile stations employs the method explained in the first embodiment.

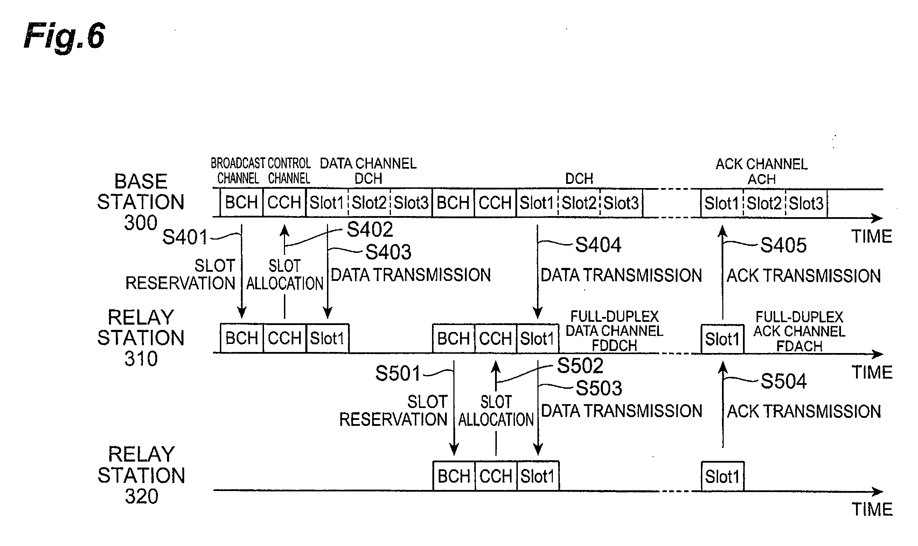

Fig. 6 is a timing chart showing the timing flow of communication channel control for half-duplex communication, in the case of indirect relaying from the base station 300 to the relay station 310, and then to the relay station 320. The timing flow in Fig. 6 shows communication channel control based on SRARQ. By using a wireless communication device 100 with analog/digital interference canceller at least in relay station 310, half-duplex communication from base station 300 to relay station 310 (reception by relay station 310) and half-duplex communication from relay station 310 to relay station 320 (transmission by relay station 310) can be realized simultaneously, and efficiency equal to that for full-duplex communication can be expected. Below, the specific communication channel control is explained.

The base station 300 requests reservation of slot 1 by the relay station 310 using the broadcast channel BCH (S401). Upon receiving the slot reservation request, the relay station 310 notifies the base station 300, via the control channel CCH, that slot 1 has been allocated (S402). The base station 3 00 transmits data to the relay station 310 using the allocated slot 1 (S403).

Next, relay station 310, which is receiving data using slot 1, requests reservation of slot 1 by relay station 320 using the broadcast channel BCH, similarly to the request by the base station 300 (S501). Upon receiving the slot reservation request, relay station 320 uses the control channel CCH to notify relay station 310 that slot 1 has been allocated (S502), and relay station 310 simultaneously receives data from base station 300 (S404) and transmits data to relay station 320 (S503) using the data channel DCH.

Finally, each station transmits, receives, or transmits and receives ACK or NAK signals via the ACK channel ACH (S405, S504). Here, the base station 300 only receives signals, and the relay station 320 only transmits signals. When there exists a third relay station to which data is relayed from relay station 320, communication from relay station 320 to this third relay station cannot use slot 1. This is because if slot 1 is used by relay station 320 for data transmission, then relay station 310 would no longer be able to receive signals from base station 300 due to interference from relay station 320.

However, when there is a fourth relay station to which data is relayed from the third relay station, this fourth relay station can use slot 1, and when the overreach is n stations, the same slot can be used by a relay station at a distance nC1. That is, interference between relay stations is measured, and channels are allocated based on the results. Relay stations differ from base stations in that it is necessary to support reception of the broadcast channel BCH and transmission on the control channel CCH.

In methods of the prior art, separate wireless resources (time slots) are used for reception and for transmission in a relay station; but when using the wireless communication device 100 with an analog/digital interference canceller, through the communication channel control of this embodiment, the efficiency of frequency use can be improved compared with the communication channel control of the prior art.

Next, advantageous results of the action of the relay station 310 comprising the wireless communication device 100 of the second embodiment are explained. In the relay station 310, the communication control portion 111 determines the time interval for use in data transmission/reception with the base station 300 which is a destination device in a procedure prior to data communication with the base station 300, and in addition determines the time interval for use in data transmission/reception with the relay station 320, different from the base station 300, as the time interval used for data transmission/reception with the base station 300 in a procedure prior to data communication with the relay station 320; in the time interval thus determined by the communication control portion 111, the digital baseband circuit 107 can execute control so as to receive data from the base station 300 and so as to transmit data to the relay station 320, and can execute control so as to receive data from the relay station 320 and so as to transmit data to the base station 300. By this means, communication efficiency can be improved.

### Third Embodiment

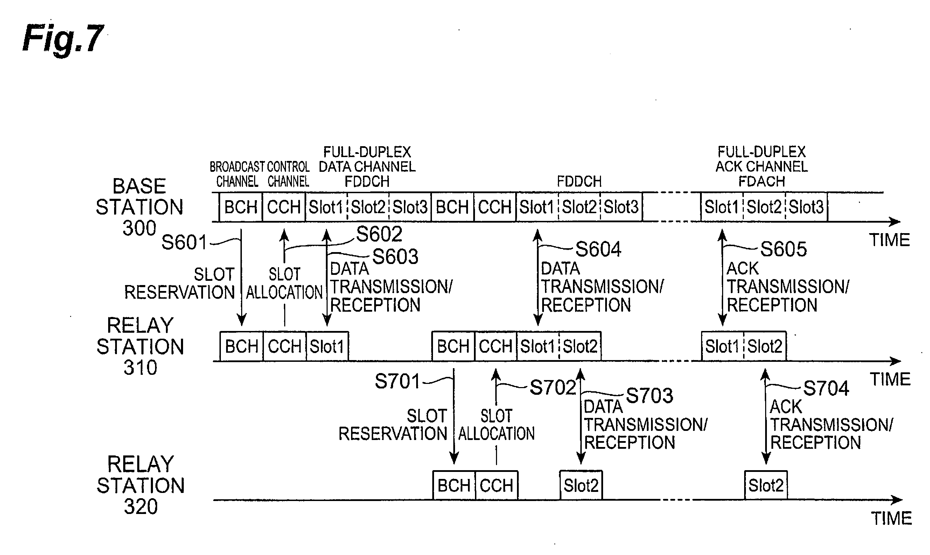

Next, a third embodiment is explained. In this embodiment, similarly to the second embodiment, a communication channel control method for relaying data from a base station is described; but a difference with the second embodiment, in which the partner devices for transmission and reception in the same time slot were different, is that in this embodiment a communication channel control method is described in which the partner device for transmission and reception in the same time slot is the same. Fig. 7 is a timing chart showing the timing flow for full-duplex relay communication channel control. The timing chart in Fig. 7 assumes communication channel control based on SRARQ. Here, by using a wireless communication device 100 with analog/digital interference canceller in each station (base station 300, relay station 310, relay station 320), full-duplex communication between the base station and relay stations can be realized. Below is an explanation referring to Fig. 7.

The base station 300 requests reservation of "slot 1" by relation station 310, using the broadcast channel BCH (S601). Upon receiving the slot reservation request, relay station 310 uses the control channel CCH to notify base station 300 that "slot 1" has been allocated (S602), and base station 300 and relay station 310 perform simultaneous transmission/reception of data in "slot 1" of the full-duplex data channel FDDCH (S603). Next, relay station 310, similarly to base station 300, requests reservation of slot 2 by relay station 320 using the broadcast channel BCH (S701), and upon receiving this request, relay station 320 uses the control channel CCH to notify relay station 310 of the allocation of "slot 2" (S702).

The relay station 310 then performs data transmission/reception with base station 300 using "slot 1" of the full-duplex data channel FDDCH (S604), and in addition performs simultaneous data transmission/reception with relay station 320 using "slot 2" of the full-duplex data channel FDDCH (S703). Finally, each station uses the full-duplex ACK channel FDACH to simultaneously transmit and receive ACK or NAK signals, using the respectively allocated slots (S605, S704).

When using full-duplex communication in this way, because slot 1 cannot be used between relay station 310 and relay station 320, relay station 310 reserves slot 2, and relay station 320 allocates slot 2. When there is a third relay station which further relays data from relay station 320, in order to avoid interference with other stations, it is necessary to use slot 3 between relay station 320 and this third relay station. When there is a fourth relay station which further relays data from the third relay station, this fourth relay station can use slot 1.

Here, advantageous results of the action of a relay station 310 comprising the wireless communication device 100 of the third embodiment are explained. In a procedure prior to data communication with the base station 300 which is a destination device, the communication control portion 111 of this relay station 310 determines the first time interval (for example, slot 1) for use in data transmission/reception with the base station, and in addition, in a procedure prior to data communication with a relay station 320 different from the base station, determines the second time interval (for example, slot 2), different from the first time interval, for use in data transmission/reception with the relay station 320. Then, in the first time interval determined by the communication control portion 111, the digital baseband circuit 107 executes control so as to perform data transmission/reception with the base station 300, and in the second time interval thus determined, executes control so as to perform data transmission/reception with the relay station 320. By this means, spectrum efficiency can be improved.

### Fourth Embodiment

Next, as a fourth embodiment, a communication channel control method in CDMA/TDD communication is explained. For full-duplex communication channel control in CDMA/TDD communication, by allocating to each of the time slots in TDMA/TDD communication channel control described in the first through third embodiments a different spreading code, and by performing simultaneous transmission/reception processing, application to CDMA/TDD is possible. Fifth Embodiment

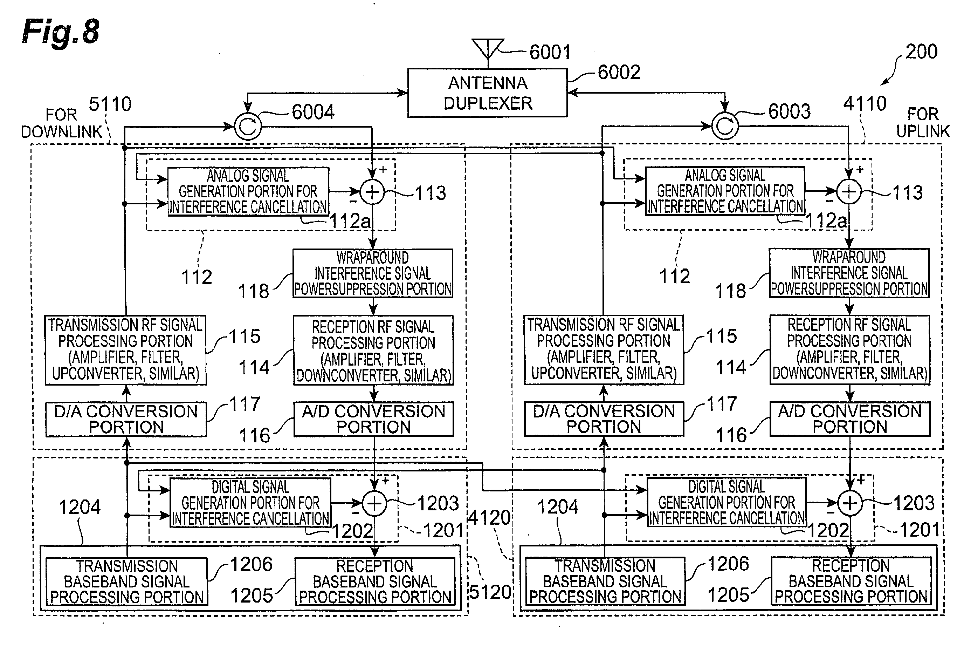

Next, as a fifth embodiment, a communication channel control method in hybrid TDD/FDD communication is explained. Hybrid TDD/FDD is a method in which full-duplex communication is realized in each of the bands of the upward line and the downward line performing half-duplex communication in FDD of the prior art. Below, the configuration of a wireless communication device used to implement this method is explained. Fig. 8 is a block diagram showing the configuration of a wireless communication device 200 with an analog/digital interference canceller, used to implement the communication channel control method in hybrid TDD/FDD communication.

In the wireless communication device 200 of this fifth embodiment, whether the wireless communication device 200 is used in the base station or in a mobile station, a characteristic is that transmission and reception are performed simultaneously using the uplink carrier frequency, and transmission and reception are performed simultaneously using the downlink carrier frequency.

This wireless communication device 200 has an antenna 6001, antenna duplexer 6002, circulators 6003 and 6004, uplink analog signal processing portion 4110, downlink analog signal processing portion 5110, uplink digital signal processing portion 4120 (data communication control means), and downlink digital signal processing portion 5120 (data communication control means). The analog signal processing portions 4110 and 5110 have an interference canceller portion 112, receieved RF signal processing portion 114, transmission RF signal processing portion 115, A/D conversion portion 116, D/A conversion portion 117, and wraparound interference signal power suppression portion 118. The circulator 6003 connected to the uplink analog signal processing portion 4110 inputs the reception signal at the uplink RF carrier frequency, received from the antenna 6001 via the antenna duplexer 6002, to the uplink analog signal processing portion 4110. The transmission signal generated by the uplink analog signal processing portion 4110 is transmitted, via the circulator 6003 and antenna duplexer 6002, from the antenna 6001. On the other hand, the circulator 6004 connected to the downlink analog signal processing portion 5110 inputs the reception signal at the downlink RF carrier frequency, received from the antenna 6001 via the antenna duplexer 6002, to the downlink analog signal processing portion 5110. Transmission signals generated by the downlink analog signal processing portion 5110 are transmitted, via the circulator 6004 and antenna duplexer 6002, from the antenna 6001.

At both the uplink RF carrier frequency and at the downlink RF carrier frequency, it is necessary to alleviate the effect of wraparound interference signals arising from imperfection in the circulators 6003 and 6004, in addition to wraparound interference signals arising from imperfection in of the antenna duplexer 6002 in the wireless communication device 200 of this embodiment during simultaneous transmission and reception. To this end, an interference canceller portion 112 operating in the analog domain in the uplink analog signal processing portion 4110 uses both signals generated in the transmission RF signal processing portion 115 of the uplink analog signal processing portion 4110 and signals generated in the transmission RF signal processing portion 115 of the downlink analog signal processing portion 5110 to eliminate wraparound interference signals. Similarly, the interference canceller portion 112 in the analog domain in the downlink analog signal processing portion 5110 uses both signals generated in the transmission RF signal processing portion 115 of the downlink analog signal processing portion 5110 and signals generated in the transmission RF signal processing portion 115 of the uplink analog signal processing portion 4110 to eliminate wraparound interference signals.

Similarly to wraparound interference signal cancellation in the analog signal processing portion, in the wireless communication device 200 which performs simultaneous transmission and reception at both the uplink RF carrier frequency and at the downlink RF carrier frequency, the digital signal generation portion for interference cancellation 1202 in the uplink digital signal processing portion 4120 uses both the output of the transmission baseband signal processing portion 1206 in the uplink digital signal processing portion 4120 and the output of the transmission baseband signal processing portion 1206 in the downlink digital signal processing portion 5120, to generate digital signals for interference cancellation in the digital domain. Similarly, the digital signal generation portion for interference cancellation 1202 in the downlink digital signal processing portion 5120 uses both the output of the transmission baseband signal processing portion 1206 in the uplink digital signal processing portion 4120 and the output of the transmission baseband signal processing portion 1206 in the downlink digital signal processing portion 5120, to generate digital signals for interference cancellation in the digital domain.

By means of this configuration, in this wireless communication device 200 which performs simultaneous transmission and reception at both the uplink RF carrier frequency and at the downlink RF carrier frequency, the effect of wraparound interference signals from the same link and wraparound interference signals from other links, superposed on reception signals for each link, can be alleviated. As a result, simultaneous transmission and reception become possible at both the uplink RF carrier frequency and at the downlink RF carrier frequency, so that the efficiency of frequency use can be improved.

In Fig. 8, similarly to the wireless communication device 100 shown in Fig. 1, a communication control portion (time interval determination means and data communication control means, not shown) to control the communication procedure is provided; this communication control portion performs a procedure prior to communication with the destination device, performs time slot reservation and allocation processing, and performs simultaneous transmission/reception of data using the allocated time slots.

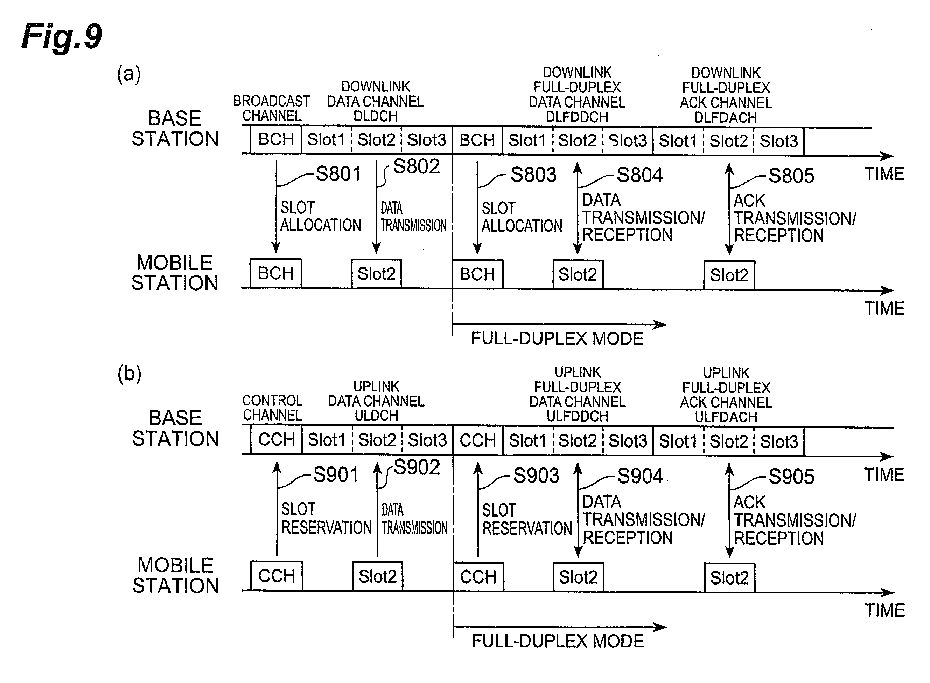

Next, the communication channel control method in the wireless communication device 200 configured in this way is explained. Fig. 9 is a timing chart showing the timing flow of communication channel control for a base station and a mobile station in this embodiment, in which different carrier frequencies are used for the downlink (from base station to mobile station) and for the uplink (from mobile station to base station). Here (a) of Fig. 9 is a timing chart showing the timing flow for the downlink using carrier frequency f0, and (b) of Fig. 9 is a timing chart showing the timing flow for the uplink using carrier frequency f1. The base station and mobile station comprise the wireless communication device 200 shown in Fig. 8.

Prior to the full-duplex data channel FDDCH in Fig. 9, the base station and mobile station are operating as FDD devices of the prior art. First, the mobile station reserves a slot in the control channel CCH for the uplink which is the upward line (S901), and allocates a slot in the broadcast channel BCH for the downlink which is the downward line (S801). Next, data transmission and ACK transmission are performed using the downlink data channel DLDCH and uplink data channel ULDCH (S802, S902).

In full-duplex mode performing simultaneous transmission and reception, the mobile station reserves a slot in the control channel CCH for the uplink (S903), and the base station allocates a slot in the broadcast channel BCH for the downlink (S803). Here, slot 2 is reserved, and slot 2 is allocated.

Then, full-duplex data transmission and reception are performed in the downlink full-duplex data channel DLFDDCH and in the uplink full-duplex data channel ULFDDCH (S804, S904), and corresponding ACK signals are transmitted and received through the downlink full-duplex ACK channel DLFDACH and the uplink full-duplex ACK channel ULFDACH (S805, S905).

In full-duplex mode, processing equivalent to the TDMA/TDD communication channel control explained in the first embodiment is performed for both the uplink and the downlink. In Fig. 9, the communication channel control method for the case of using SWARQ is shown.

Moreover, full-duplex communication can also be achieved in only one band among a band pair. For example, in order to obtain the maximum throughput in downlink communication, when data is transmitted in the downlink direction from base station to mobile station by using a carrier frequency f0 as the downlink, by simultaneously transmitting and receiving data on an uplink using a carrier frequency f1, data transmission from mobile station to base station can be performed together with data transmission from base station to mobile station. In the FDD methods of the prior art, when the same signal band is used for the uplink and the downlink, asymmetric communication quantities in the uplink and downlink could not be supported; but by using full-duplex communication as described above, even when the same signal band is simultaneously used for the uplink and the downlink, asymmetric communication quantities can be accommodated.

A mobile station comprising the wireless communication device 200 of the fifth embodiment in this way determines, in a communication control portion (not shown), the time interval for data transmission/reception with the base station which is the destination device in a procedure prior to data communication with the base station, and in the time interval thus determined, the uplink digital signal processing portion 4120 executes control to transmit data using one frequency band and to simultaneously receive data; in addition, in the above time interval, the downlink digital signal processing portion 5120 can execute control so as to transmit data using a separate frequency band different from the one frequency band, and so as to simultaneously receive data. By this means, communication efficiency can be improved.

### Sixth Embodiment

Next, as a sixth embodiment, a communication channel control method is described in which full-duplex communication is performed in autonomous distributed control using CSMA/CA. In autonomous distributed control, there exists no base station, and so all stations are mobile stations, and relaying is also accomplished through communication between mobile stations.

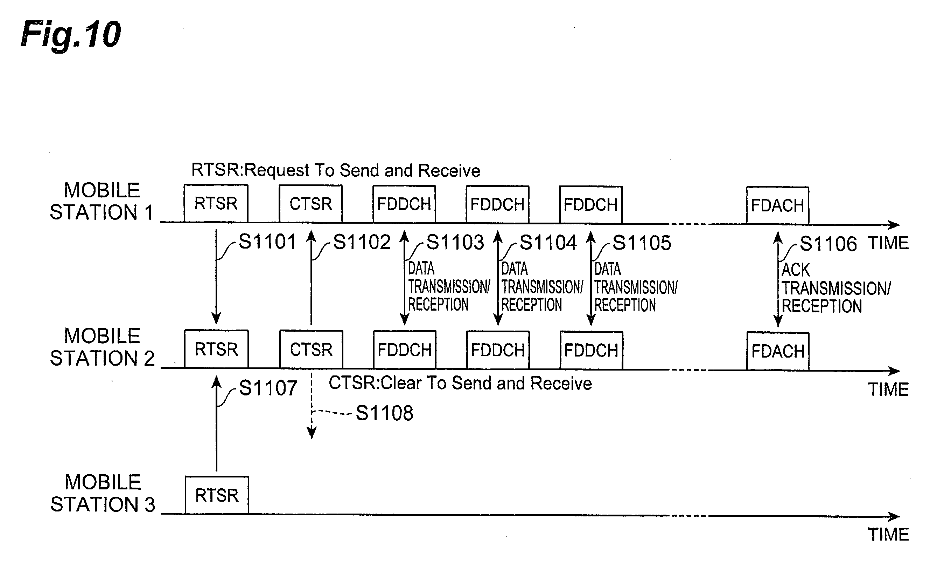

Fig. 10 is a timing chart showing the timing flow of communication channel control based on SRARQ in CSMA/CA communication in the sixth embodiment. By using wireless communication devices 100 with analog/digital interference cancellers as shown in Fig. 1 in the two mobile stations, full-duplex communication between the mobile stations can be achieved. The communication control portion 111 in the wireless communication devices 100 performs processing to determine the packet length to perform data transmission/reception in a process prior to communication, and operates so as to perform data transmission/reception using the packet length thus determined. In CSMA/CA communication of the prior art, an RTS (Request to Send) signal indicating a data transmission request, and a CTS (Clear to Send) signal indicating permission for the data transmission request after reception of the data transmission request RTS, are used to resolve the hidden terminal problem; but in CSMA/CA in which full-duplex communication is performed, control is executed so as to perform not only transmission (reception), but reception (transmission) as well, using RTSR (Request To Send and Receive) and CTSR (Clear To Send and Receive) signals. Below, an explanation is given referring to Fig. 10.

First, the mobile station 1 transmits an RTSR, which is a request for simultaneous transmission and reception, to "mobile station 2" (S1101), and "mobile station 2", after receiving the request of "mobile station 1" and confirming that packet transmission/reception is possible, transmits to "mobile station 1", as a simultaneous transmission/reception response, a CTSR indicating that simultaneous transmission/reception is possible (S1102). Next, "mobile station 1" and "mobile station 2" perform N slots' worth of simultaneous transmission and reception in the full-duplex data channel FDDCH (S1103 to S1105), and finally, perform simultaneous transmission and reception of ACK or NAK signals for the N slots' worth of data in the full-duplex ACK channel FDACH (S1106).

When, as in Fig. 10, mobile station 3 exists, and this mobile station 3 transmits an RTSR (RTS) to mobile station 2 at a time later than the RTSR of mobile station 1 (S1107), by detecting the CTSR (CTS) transmitted by mobile station 2 to mobile station 1 (S1108), mobile station 3 can ascertain that this CTSR is not intended for mobile station 3. Hence mobile station 3 can operate so as not to perform signal transmission or other processing for a fixed time thereafter. Also, when "mobile station 2" has no data to be transmitted to "mobile station 1", instead of a CTSR, a CTS as in the prior art can be transmitted, and "mobile station 1" can perform transmission along via the full-duplex data channel FDDCH, so that interference with other stations is reduced.

In the "mobile station 1" comprising the wireless communication device 100 of this sixth embodiment, the communication control portion 111 determines, in a procedure prior to data communication with "mobile station 2" which is a destination device, the packet length for use in data transmission/reception with "mobile station 2", and in the digital baseband circuit 107, control can be executed so as to perform data transmission according to the packet length thus determined, while simultaneously receiving data. By this means, communication efficiency can be improved.

### Seventh Embodiment

Next, a seventh embodiment is explained. A characteristic of this embodiment is that, when performing simultaneous transmission and reception between a mobile station and a base station, the amount of transmission data transmitted from the mobile station and the amount of transmission data transmitted from the base station are compared, the redundancy of transmission data is increased for the transmission data with the smaller amount of data by means of an error correction code, spreading code or similar, and the transmission data is caused to be transmitted at lower power than the transmission data with the larger amount of data.

In this embodiment, the communication control portion 111 in the wireless communication device 100 shown in Fig. 1 compares the amount of data of transmission data to be transmitted and the amount of data of scheduled reception data, received from the destination device in a procedure prior to data communication; causes the redundancy of transmission data to be increased, by means of an error correction code, spreading code or similar, for the transmission data, among the transmission data of the wireless communication device and the transmission data of the destination device, with the smaller amount of data; and executes control so that for this transmission data, transmission is performed at lower power than for the transmission data with the larger amount of data. Below, processing in this embodiment is explained.

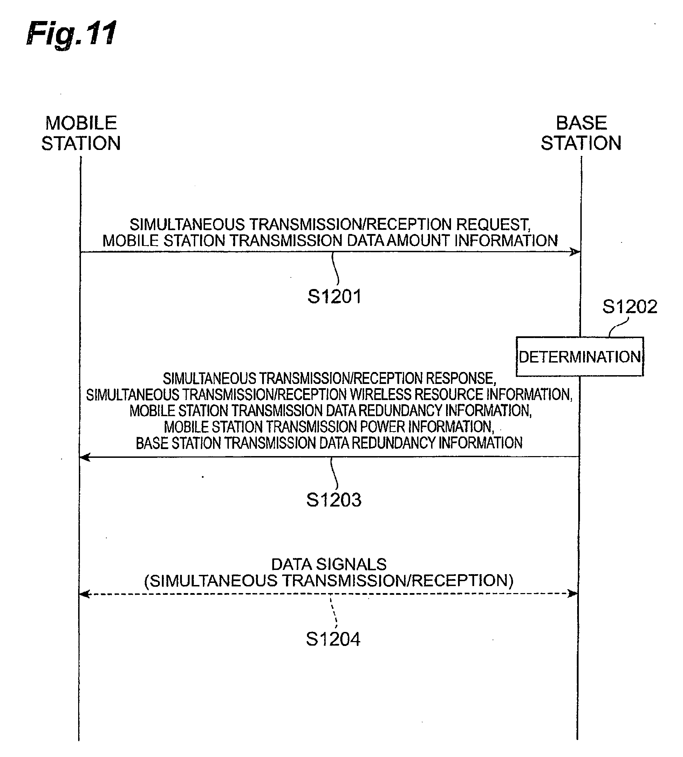

Fig. 11 is a sequence diagram of communication channel control in the seventh embodiment. The mobile station transmits transmission data amount information for data to be transmitted from the mobile station to the base station, together with a simultaneous transmission/reception request (S1201). Upon receiving the simultaneous transmission/reception request, the base station compares the transmission data amount information of the mobile station, which has been transmitted together with the simultaneous transmission/reception request, with the transmission data amount of transmission data to be transmitted from the base station to the mobile station, and determines the transmission power and transmission redundancy information, such as an error correction code, spreading code, or similar to be used by the mobile station when performing simultaneous transmission/reception, as well as the transmission power and transmission redundancy information, such as an error correction code, spreading code, or similar to be used by the base station when performing simultaneous transmission/reception (S1202).

Then, the base station sends to the mobile station a simultaneous transmission/reception response, simultaneous transmission/reception wireless resource information, transmission redundancy information and transmission power information for the mobile station used when the mobile station transmits data, and transmission data redundancy information for the base station used in data transmission by the base station (S1203). Here, simultaneous transmission/reception wireless resource information is information indicating the communication channel (for TDD, the time slots used; for CDMA, the spreading code and similar used) employed when performing simultaneous transmission/reception.

Thereafter, the mobile station and base station perform simultaneous data transmission/reception (S1204). When performing data transmission during simultaneous transmission/reception, the mobile station uses the transmission redundancy information and transmission power information for the mobile station as notified by the base station. And, the base station performs data transmission using, as transmission data redundancy information for the base station, the transmission method of which the mobile station has been notified. On the other hand, in data reception, the mobile station performs reception processing of data transmitted from the base station based on the contents of notification of the transmission data redundancy information for the base station, and the base station performs reception processing of data transmitted from the mobile station based on the contents of the notification sent to the mobile station as the transmission data redundancy information for the mobile station.

In the base station, after receiving the simultaneous transmission/reception request and the mobile station transmission data amount information, the transmission data amount of data to be transmitted from the base station is compared with the transmission data amount from the mobile station, and the mobile station transmission data redundancy/transmission power as well as the base station transmission data redundancy/transmission power are determined such that, for the smaller amount of transmission data transmission data, redundancy is caused to be increased by means of an error correction code or spreading code or similar, and data transmission is performed at lower power than for the larger amount of transmission data.

For example, when the mobile station transmission data amount is 1/8 the base station transmission data amount, by performing error correction coding with a coding rate of 1/2 and spectrum spreading at a spreading rate of 4 for the mobile station transmission data, the transmission data amount is made equal to that for the base station, and the transmission power for the mobile station is made lower than for the base station. By this means, it is possible to reduce the effect of interference imparted by mobile station transmission data when the base station is receiving transmission data during simultaneous transmission /reception, so that the received signal quality of signals transmitted from the base station can be improved. Further, signals transmitted from the mobile station are transmitted with redundancy increased through an error correction code and spectrum spreading, so that the effect of interference received from base station transmission signals can be kept low.

When simultaneous transmission/reception is performed without using the method shown in Fig. 11, if the mobile station transmission data amount and the base station transmission data amount are different, then in a portion of an interval of time data transmitted from both the wireless communication devices causes interference, but after data transmission from the wireless communication device with the smaller amount of data is completed, no interference occurs. In this case, over the interval in which interference occurs, there is the possibility that data may be erroneously detected in each of the wireless communication devices.

On the other hand, when the method of this embodiment is used, data transmission is performed such that the redundancy is increased for the smaller amount of transmission data, so that the data amount is the same as the larger amount of transmission data; as a result, signal transmission occurs from both wireless communication devices over the entirety of the data transmission interval, so that interference occurs. However, because data transmission is performed at low transmission power for the data transmitted from one of the wireless communication devices, the effect imparted as interference can be kept small. That is, this method enables improvement of characteristics by means of the time diversity effect with respect to interference occurring in simultaneous transmission/reception between wireless communication devices with different transmission data amounts.

As the communication channel control described in Fig. 11, for example, a method equivalent to that of the first through sixth embodiments (Fig. 3, Fig. 4, Fig. 6, Fig. 7, Fig. 9, and Fig. 10) can be used. Using the method of this embodiment, when the mobile station uses the control channel CCH to issue a request for slot reservation to the base station, mobile station transmission data amount information is transmitted at the same time. Next, upon receiving the request, the base station compares the transmission data amount information of this notification with the amount of data to be transmitted from the base station during simultaneous transmission/reception, and determines the transmission data redundancy information/transmission power for the mobile station and the transmission data redundancy information/transmission power for the base station.

Thereafter, together with the simultaneous transmission/reception response, the base station notifies the mobile station 1, using the broadcast channel BCH, of the slot number to be used in simultaneous transmission/reception as simultaneous transmission/reception wireless resource information; at this time, using the broadcast channel BCH, mobile station 1 simultaneously provides notification of the transmission data redundancy information/transmission power for mobile station 1 and of the transmission data redundancy information for the base station. Thereafter, simultaneous transmission/reception is performed in the slot of the full-duplex data channel FDDCH provided in the notification as the simultaneous transmission/reception wireless resource information. After simultaneous data transmission/reception, simultaneous ACK/NAK transmission and reception are performed in the full-duplex ACK channel FDACH.

When the simultaneous transmission/reception request is made from the base station rather than from the mobile station, the base station uses the broadcast channel BCH to make the simultaneous transmission/reception request and to notify the mobile station of the base station transmission data amount information and wireless resource information indicating the communication channel to be used in simultaneous transmission/reception. Then, in the mobile station, the base station transmission data amount information of this notification is compared with the data amount to be transmitted from the mobile station during simultaneous transmission/reception, and the transmission data redundancy information/transmission power for the base station, and the transmission data redundancy information/transmission power for the mobile station, are determined. Then, the mobile station uses the successive control channel CCH to simultaneously send the simultaneous transmission/reception response, the transmission data redundancy information/transmission power for the base station, and the transmission data redundancy information for the mobile station.

As explained above, when the method explained in Fig. 11 is applied to TDMA/TDD communication, when time intervals are partitioned as time slots in order to transmit and receive data, if the transmission data amount is smaller than the data amount which can be transmitted in a time interval partitioned as a time slot, by increasing the redundancy through an error correction code and spectrum spreading to increase the amount of data, the entire time interval partitioned as a time slot can be utilized to intensify interference robustness, and by decreasing the transmission power accordingly, the effect of interference arising during simultaneous transmission/reception can be reduced.

When this method is applied to CSMA/CA communication also, a method similar to the communication channel control method shown in Fig. 10 can be used. In this case, the RTSR transmitted from mobile station 1, in which mobile station 2 is the destination device, comprises the transmission data amount information for mobile station 1 together with the simultaneous transmission/reception request information. In mobile station 2, the transmission data amount information for mobile station 1 is compared with the transmission data amount information for mobile station 2, and the transmission data redundancy information/transport power for mobile station 1, and the transmission data redundancy information/transmission power for mobile station 2, are determined.

Mobile station 2 uses the successive CTSR to simultaneously send the simultaneous transmission/reception response and notification of the transmission data redundancy information/transmission power for mobile station 1 and transmission data redundancy information for mobile station 2. Then, simultaneous data transmission/reception is performed in the full-duplex data channel FDDCH. And, simultaneous ACK/NAK transmission and reception are performed in the full-duplex ACK channel FDACH.

A maximum packet length is stipulated in general CSMA/CA methods used in wireless LANs and similar; but packet lengths below this maximum differ according to the amount of data transmitted. Hence when applying the method shown in Fig. 11 to CSMA/CA communication, the transmission data amounts of two mobile stations which are to perform simultaneous transmission/reception are compared, and redundancy is increased, through an error correction code, spectrum spreading and similar, for the mobile station with the smaller amount of transmission data, so that the data amount is the same as for the mobile station with the larger amount of transmission data, and transmission is performed at low transmission power. By this means, even when this method is applied to CSMA/CA communication, advantageous results similar to those for application to TDMA/TDD can be obtained.

As explained above, in a mobile station (or base station or relay station) comprising the wireless communication device 100 of the seventh embodiment or wireless communication device 200, the communication control portion 111 compares the received reception data amount and the transmission data amount for transmission during data communication, and when the transmission data amount is smaller, can process the transmission data so as to increase the transmission data redundancy, to utilize the entirety of the time intervals partitioned into time slots and intensity interference robustness, and by decreasing the transmission power accordingly, can reduce the effect of interference occurring during simultaneous transmission and reception.

## Claims

1. A wireless communication method, comprising the steps of:
determining, in a procedure prior to data communication with a destination device, a time interval for performing transmission/reception of data to and from the destination device; and
executing control so as to perform data transmission in the time interval determined in said time interval determination step and also to perform data reception.

2. A wireless communication method, comprising the steps of:
determining, in a procedure prior to data communication with a destination device, a time interval for performing transmission/reception of data to and from the destination device, and of determining, in a procedure prior to data communication with another destination device different from said destination device, a time interval for performing transmission/reception of data to and from said destination device as a time interval for performing transmission/reception of data to and from the other destination device; and
executing control, in the time interval determined in said time interval determination step, so as to perform reception of data from said destination device and to perform transmission of data to said other destination device, and executing control so as to perform reception of data from said other destination device and to perform transmission of data to said destination device.

3. A wireless communication method, comprising the steps of:
determining, in a procedure prior to data communication with a destination device, a first time interval for performing transmission/reception of data to and from the destination device, and of determining, in a procedure prior to data communication with another destination device different from said destination, a second time interval, different from said first time interval, for performing transmission/reception of data to and from the other destination device; and
executing control, in the first time interval determined in said time interval determination step, so as to perform transmission and reception of data to and from said destination device, and in the second time interval determined in said time interval determination step, executing control so as to perform transmission and reception of data to and from said other destination device.

4. A wireless communication method, comprising the steps of:
determining, in a procedure prior to data communication with a destination device, a time interval for performing transmission/reception of data to and from the destination device; and
executing control, in the time interval determined in said time interval determination step, to perform data transmission using one frequency band and also to perform data reception, and in said time interval, executing control so as to perform data transmission using another frequency band different from said one frequency band and also to perform data reception.

5. A wireless communication method, comprising the steps of:
determining, in a procedure prior to data communication with a destination device, a packet length for performing transmission/reception of data to and from the destination device; and
executing control so as to perform data transmission using the packet length determined in said packet length determination step and also to perform data reception.

6. The wireless communication method according to any one of Claims 1 through 5, wherein, in said data communication control step, the reception data amount to be received and the transmission data amount to be transmitted are compared, and when the transmission data amount is smaller, the transmission data is processed such that redundancy of the transmission data is increased.

7. A wireless communication device, comprising:
time interval determination means for determining, in a procedure prior to data communication with a destination device, a time interval for performing data transmission/reception to and from the destination device; and
data communication control means for executing control so as to perform data transmission in the time interval determined by said time interval determination means and also to perform data reception.
